# EUROPEAN PATENT APPLICATION

(11) **EP 1 892 970 A1**
(43) Date of publication of application: **27.02.2008**
(21) Application number: 05751440.8
(22) Date of filing: 14.06.2005
(51) Int. Cl.: H04Q 7/36, H04B 7/26

(54) **WIRELESS BASE STATION SYSTEM**

(71) Applicant: MITSUBISHI DENKI KABUSHIKI KAISHA, Chiyoda-ku, Tokyo 100-8310 (JP)
(72) Inventor: KIYOMOTO, Kazuhiko, c/o MITSUBISHI DENKI K.K., Chiyoda-ku, Tokyo 100-8310 (JP); ASADA, Yoshihiro, c/o MITSUBISHI DENKI K.K., Chiyoda-ku, Tokyo 100-8310 (JP)
(74) Representative: Blot, Philippe Robert Emile
(86) International application number: PCT/JP2005/010878
(87) International publication number: WO 2006/134642

(57) **Abstract**

A radio base station main unit 4 and a plurality of remote transmitters and receivers 5 are connected to one another via communication cables 6. Each of the remote transmitters and receivers 5 carries out radio communications with mobile communication terminals 3 in a site 100 which is an area thereof. Each of cells 101, 102, and 103 which exhibits a predetermined calling capacity is comprised of one or more arbitrary sites 100 according to the traffic of the remote transmitters and receivers 5 therein.

## Description

The present invention relates to a radio base station system which is constructed with a radio base station main unit and remote transmitters and receivers being connected to one another.

Conventionally, as a radio base station system which is constructed with a radio base station main unit and remote transmitters and receivers being connected to one another, there have been provided, for example, the following system. To be more specific, in a system in which a radio base station main unit and a plurality of remote transmitters and receivers are cascaded via a telecommunication cable, a digital signal is transmitted among these sections, each of the remote transmitters and receivers carries out radio communications with a mobile communication terminal (for example, refer to patent reference 1).

In the above-mentioned conventional radio base station system, because the digital transmission sections are extended, and the radio base station main unit and the plurality of remote transmitters and receivers are cascaded, the influence of noise additive can be reduced, but a problem still remains to be solved from the viewpoint of effective use of channel resources in each remote transmitter and receiver.

The present invention is made in order to solve the above-mentioned problem, and it is therefore an object of the present invention to provide a radio base station system which can make effective use of channel resources.

In accordance with the present invention, there is provided a radio base station system in which a cell is constructed of an arbitrary number of sites each of which is the service area of a remote transmitter and receiver on the basis of the traffic of remote transmitters and receivers in the cell, the cell exhibiting a predetermined calling capacity.

As a result, there can be provided a radio base station system which can make effective use of the channel resources.
Fig. 1 is a block diagram showing a radio base station system in accordance with Embodiment 1 of the present invention;
Fig. 2 is a block diagram showing the details of a remote transmitter and receiver and a remote transmitter and receiver interface unit in the radio base station system in accordance with Embodiment 1 of the present invention;
Fig. 3 is a block diagram showing a radio base station system in accordance with Embodiment 2 of the present invention;
Fig. 4 is a block diagram showing a radio base station system in accordance with Embodiment 3 of the present invention;
Fig. 5 is an explanatory diagram showing a relation between cells and remote transmitters and receivers when a radio base station system in accordance with Embodiment 4 of the present invention is placed in a high traffic state;
Fig. 6 is an explanatory diagram showing a relation between a cell and remote transmitters and receivers when the radio base station system in accordance with Embodiment 4 of the present invention is placed in a low traffic state;
Fig. 7 is a block diagram showing a radio base station main unit of the radio base station system in accordance with Embodiment 4 of the present invention;
Fig. 8 is a flow chart showing a control process of increasing or decreasing the number of cells of the radio base station system in accordance with Embodiment 4 of the present invention;
Fig. 9 is an explanatory diagram showing a cell splitting process of the radio base station system in accordance with Embodiment 4 of the present invention;
Fig. 10 is a flow chart showing a control process of increasing or decreasing the number of cells of a radio base station system in accordance with Embodiment 5 of the present invention;
Fig. 11 is an explanatory diagram showing a cell combining process of the radio base station system in accordance with Embodiment 5 of the present invention; and
Fig. 12 is an explanatory diagram showing a cell splitting process of a radio base station system in accordance with Embodiment 6 of the present invention.

Hereafter, in order to explain this invention in greater detail, the preferred embodiments of the present invention will be described with reference to the accompanying drawings.

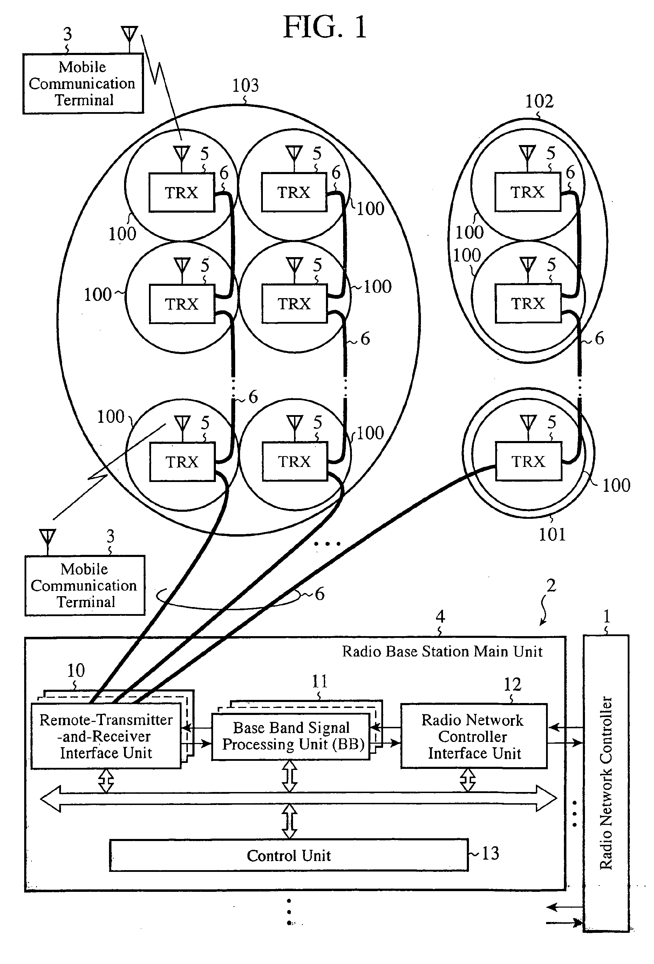

Fig. 1 is a block diagram showing a radio base station system in accordance with Embodiment 1 of the present invention. The radio base station system of this embodiment is comprised of a radio network controller 1, radio base station systems 2, and mobile communication terminals 3. The radio network controller 1 is a high-order device which is connected to a plurality of radio base station systems 2, and which controls these radio base station systems. Each radio base station system 2 has a function of transmitting and receiving a radio signal to and from a mobile communication terminal 3, and transmitting and receiving a signal to and from the high-order radio network controller 1 by cable. Each mobile communication terminal 3 is carried by a user, and communicates with a radio base station system 2 while being moved.

Each radio base station system 2 is comprised of a radio base station main unit 4, a plurality of remote transmitters and receivers (Transmitter & Receiver; TRX) 5, and communication cables 6 each of which cascades some of these remote transmitters and receivers. The radio base station main unit 4 controls data transmitted and received to and from a mobile communication terminal 3 on the basis of the value of a cell exhibiting a predetermined calling capacity, and each remote transmitter and receiver 5 makes a wireless communication connection with mobile communication terminals 3 staying in a site which is an area thereof, and transmits and receives communications data from and to these mobile communication terminals 3 to and from the radio base station main unit 4. Each cell consists of one or more arbitrary sites dependently upon the traffic of remote transmitters and receivers 5 therein. A relation between sites and cells will be mentioned later.

As shown in Fig. 1, a plurality of cascade connections can be established for each radio base station system 2 of this embodiment. The radio base station main unit 4 of each system is provided with a remote-transmitter-and-receiver interface unit 10, a base band signal processing unit (a Base Band signal processor; BB) 11, a radio network controller interface unit 12, and a control unit 13.

Each communication cable 6 is a metallic cable via which an electric signal can be transmitted, or an optical fiber cable via which a light signal can be transmitted. As a metallic cable, for example, either a cheap twisted-pair cable or a coaxial cable with a little signal loss can be used. Installation of a twisted-pair cable is easy because its connection parts are small, and either a UTP (unsealed twisted pair) cable or an STP (shield twisted pair) cable can be used suitably according to transmission distance and transmission capacity. For example, in the case of using a UTP cable of category 5, transmission over an about-100m distance can be carried out, whereas in the case of using a coaxial cable, transmission over an about-400m distance can be carried out. In the case of using an optical fiber cable, transmission over an about-20km distance can be further carried out, so that remote transmitters and receivers 5 can be disposed in a wide area.

The remote-transmitter-and-receiver interface unit 10 in the radio base station main unit 4 has a function of, in the radio base station main unit 4, serving as a communication interface with each remote transmitter and receiver 5. The base band signal processing unit 11 is a functional unit which carries out digital base band signal processes, such as spectrum de-spreading and error correction for a downlink channel, and spectrum spreading and so on for an uplink channel. The radio network controller interface unit 12 has a function of, in the radio base station main unit 4, serving as a communication interface with the radio network controller 1. The control unit 13 is a functional unit which carries out various control operations as the radio base station main unit 4, for example, which carries out call-processing control of each mobile communication terminal 3 and maintenance and supervisory control of the remote-transmitter-and-receiver interface unit 10.

Next, a flow of a signal in one cascade connection in each radio base station system 2 of Fig. 1 will be explained.

First, for the uplink channel, an analog radio signal from each mobile communication terminal 3 is received by each remote transmitter and receiver 5, and is converted into a digital base band signal within each remote transmitter and receiver 5. A digital base band signal received and converted by a remote transmitter and receiver 5 which is arranged at an end of one cascade connection when viewed from the radio base station main unit 4 is time-division multiplexed with a digital base band signal received and converted by each of other remote-transmitter-and-receivers 5 cascaded while being transmitted via each of the other remote transmitter and receivers 5 toward the radio base station main unit 4, and is finally transmitted to the remote-transmitter-and-receiver interface unit 10 of the radio base station main unit 4. Next, the base band signal processing unit 11 performs processes, such as spectrum de-spreading and error correction, on the digital base band signal, and this signal is then sent out onto a wired network via the radio network controller interface unit 12.

In contrast with this, for the downlink channel, the base band signal processing unit 11 performs a spectrum spreading process on a signal from the wired network, and a digital base band signal is sent from the remote-transmitter-and-receiver interface unit 10 to each remote transmitter and receiver 5. This digital base band signal is the one into which signals each destined for a mobile communication terminal 3 are multiplexed, and a signal is demultiplexed from the digital base band signal every time when this digital base band signal passes through each cascaded remote transmitter and receiver 5. The demultiplexed digital base band signal is transmitted by radio toward a mobile communication terminal 3 after being modulated at a specific carrier frequency and being converted into an analog radio signal by each remote transmitter and receiver 5.

The signal transmitted by radio from each remote transmitter and receiver 5 can be associated with identical data. In contrast with this, the signal transmitted by radio from each remote transmitter and receiver can be associated with different data. More specifically, when constructing a cell from each site 100 which is the service area of each remote transmitter and receiver 5, in order to use the channel resources effectively, one cell 101 can consist of one site 100 in a case in which the cell is a high traffic area. In contrast with this, one cell 102 (or one cell 103) can consist of a plurality of sites 100 in a case in which the cell is a low traffic area.

For example, in a case in which the calling capacity of each cell is 60 channels, by constructing the cell 101 from one site 100, a calling capacity of 60 channels can be achieved with one site 100 and the cell 101 is intended for a high traffic area. In contrast with this, in the case in which the cell 102 is constructed of two sites 100, because the calling capacity of 60 channels in all is shared by the two sites 100, the cell is intended for a lower traffic area compared with the case in which the aforementioned cell 101 is constructed of one site. In a case of constructing a cell for low traffic, such as the cell 103, the cell is constructed of a larger number of sites 100. By thus constructing a cell arbitrarily according to the traffic, and then constructing the cell from a plurality of sites, the channel resources can be used more effectively.

Next, the details of the radio base station main unit 4 will be explained.

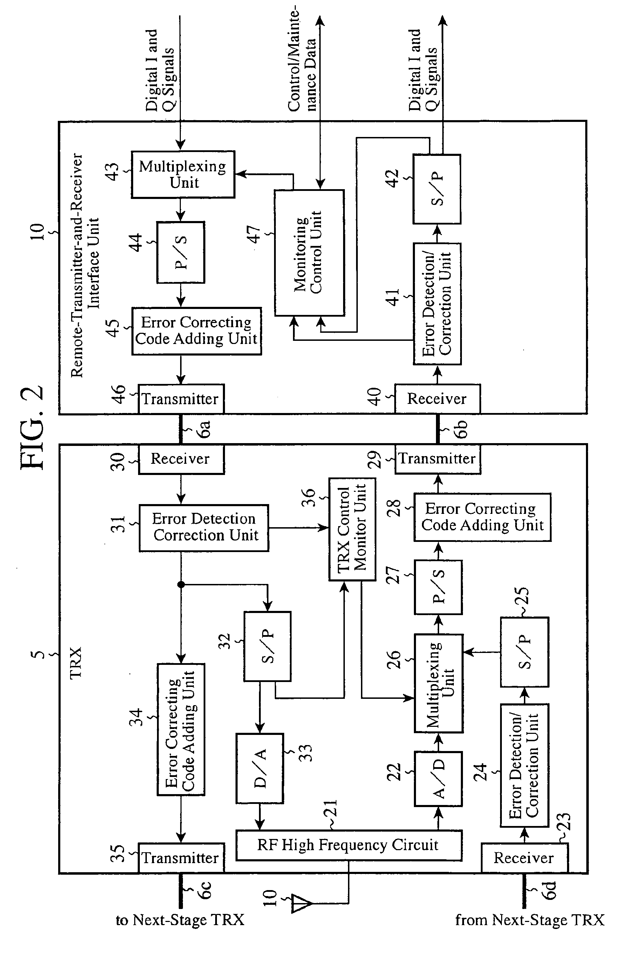

Fig. 2 is a detailed block diagram of each remote transmitter and receiver 5 and the remote-transmitter-and-receiver interface unit 10 in the radio base station main unit 4, which are shown in Fig. 1.

Each remote transmitter and receiver 5 is provided with an antenna 20, an RF (Radio Frequency) high-frequency circuit 21, an A/D (Analog/Digital) converter 22, a receiver 23, an error detection/correction unit 24, a serial/parallel conversion unit (S/P) 25, a multiplexing unit 26, a parallel/serial conversion unit (P/S) 27, an error correcting code adding unit 28, a transmitter 29, a receiver 30, an error detection/correction unit 31, a serial/parallel conversion unit (S/P) 32, a D/A (Digital/Analog) converter 33, an error correcting code adding unit 34, a transmitter 35, and a TRX monitoring control unit 36.

The remote-transmitter-and-receiver interface unit 10 is provided with a receiver 40, an error detection/correction unit 41, a serial/parallel conversion unit (S/P) 42, a multiplexing unit 43, a parallel/serial conversion unit (P/S) 44, an error correcting code adding unit 45, a transmitter 46, and a monitoring control unit 47.

The transmitters 29 and 35 of each remote transmitter and receiver 5 construct a wire transmitting unit of the present invention, and the receivers 23 and 30 of each remote transmitter and receiver 5 construct a wire receiving unit of the present invention. Similarly, the transmitter 46 of the remote-transmitter-and-receiver interface unit 10 constructs the wire transmitting unit of the present invention, and the receiver 40 of the remote-transmitter-and-receiver interface unit 10 constructs the wire receiving unit of the present invention. Each of communication cables 6a, 6b, 6c and 6d transmits a digital signal or a light signal.

Next, a flow of a signal in the downlink channel will be explained with reference to Fig. 2.

First, in the remote-transmitter-and-receiver interface unit 10, digital base band signals (digital I and Q (inphase and quadrature) signals) on which spectrum spreading processes are performed by base band signal processing units 11, respectively, and a maintenance supervisory control signal and a call-processing control signal for next-stage remote transmitters and receivers 5, which are transmitted from the control unit 13, are time-division multiplexed by the multiplexing unit 43 in the remote-transmitter-and-receiver interface unit 10. A maintenance supervisory control signal and a call-processing control signal for the remote-transmitter-and-receiver interface unit 10 are used for supervisory control in the remote-transmitter-and-receiver interface unit 10 by the monitoring control unit 47.

Next, the parallel/serial conversion unit (P/S) 44 converts the multiplexed parallel data into serial data.
The error correcting code adding unit 45 then performs processes, such as an error detection/correction code (check bit) adding process and an interleave process of making it possible to deal with burst errors, on the serial data so that errors which may occur in transmission via the communication cable 6a can be detected and corrected. Next, the transmitter 46 which consists of an amplifier and so on sends out the serial data onto the communication cable 6a to transmit them toward a first remote transmitter and receiver 5.

The remote transmitter and receiver 5 then receives the signal by using the receiver 30 which consists of an amplifier and so on, and performs a detection process and an error correction process of correcting data errors which has occurred in the signal when being transmitted through the communication cable 6a on the signal by using the error detection/correction unit 31. Next, the signal is divided into a signal to be transmitted from the antenna 20, and a signal to be sent out to the cascaded next-stage remote transmitter and receiver 5. The serial data about the maintenance supervisory control signal and the call-processing control signal for the remote transmitter and receiver 5 in question are converted into parallel data by the serial/parallel conversion unit (S/P) 32, are inputted to the TRX monitoring control unit 36, and are used for the supervisory control and call-processing control in this remote transmitter and receiver 5.

The serial data about the signal to be transmitted from the antenna 20 are converted into parallel data by the serial/parallel conversion unit (S/P) 32, and this digital signal is further converted into an analog signal by the D/A converter 33. The RF high frequency circuit 21 then generates a radio transmission signal which is modulated at a specific carrier frequency, and transmits the radio signal from the antenna 20.

On the other hand, the error correcting code adding unit 34 performs processes, such as error detection/correction code (check bit) adding process and an interleave process of making it possible to deal with burst errors, on the signal to be sent out to the cascaded next-stage remote transmitter and receiver 5 so that errors which may occur during transmission via the communication cable 6c can be detected and corrected. Next, the transmitter 35 which consists of an amplifier and so on sends out the signal onto the communication cable 6c to transmit it toward the cascaded next-stage remote transmitter and receiver 5.

Each of the subsequent remote transmitters and receivers 5 also carries out the above-mentioned operation in turn, and, as a result, all transmission signals are transmitted from the base band signal processing unit 11 to each cascaded remote transmitter and receiver 5. In this case, the radio base station main unit 4 transmits a transmission signal to a cascaded previous-stage remote transmitter and receiver 5 according to the value of the cell, which is comprised of the site of each remote transmitter and receiver 5, as mentioned above.

Next, a flow of signals in the uplink channel will be explained with reference to Fig. 2.

Each remote transmitter and receiver 5 receives a radio signal from a mobile communication terminal 3 by using the antenna 20 first, performs a demodulation process on the received radio signal by using the RF high frequency circuit 21, and converts the analog signal into a digital signal by using the A/D converter 22.

On the other hand, the remote transmitter and receiver receives a signal transmitted thereto via the communication cable 6d from the cascaded next-stage remote transmitter and receiver 5 by using the receiver 23 which consists of an amplifier and so on. Next, the error detection/correction unit 24 performs a detection process and an error correction process of correcting data errors which occur in the signal when being transmitted through the communication cable 6d. The serial/parallel conversion unit (S/P) 25 converts the serial data into parallel data. Next, the signal transmitted thereto via the communication cable 6d from the cascaded next-stage remote transmitter and receiver 5, the signal received by the antenna 20, and a state notification signal including information about a detected state which results from the supervisory control and the call-processing control in the remote transmitter and receiver 5 in question are time-division multiplexed by the multiplexing unit 26.

The parallel/serial conversion unit (P/S) 27 then converts the multiplexed parallel data into serial data. Furthermore, the error correcting code adding unit 28 performs processes, such as error detection/correction code (check bit) adding process and an interleave process of making it possible to deal with burst errors, on the serial data so that errors which may occur during transmission via the communication cable 6b can be detected and corrected, and the transmitter 29 which consists of an amplifier and so on then sends out the serial signal onto the communication cable 6b to transmit it toward the remote-transmitter-and-receiver interface unit 10.

The remote-transmitter-and-receiver interface unit 10 receives the serial signal by using the receiver 40 which consists of an amplifier and so on, and carries out a detection process and an error correction process of correcting data errors which has occurred in the signal when being transmitted through the communication cable 6b by using the error detection/correction unit 41. Next, the serial/parallel conversion unit (S/P) 42 converts the serial data into parallel data. Next, all data received by the cascaded remote transmitters and receivers 5 respectively are sent out to the base band signal processing unit 11.

The state notification signal including information about the detected state which results from the supervisory control and the call-processing control in each cascaded remote transmitter and receiver 5 is transmitted to the monitoring control unit 47, and is further sent out to the control unit 13. The monitoring control unit 47 also sends out a state notification signal including information about a detected state which results from the supervisory control in the remote-transmitter-and-receiver interface unit 10 to the control unit 13.

Although the communication cables 6a, 6b, 6c, and 6d in Fig. 2 are shown while a distinction is made among them according to the connection parts of the communication cable 6 of Fig. 1, in a case in which signals which are transmitted through the communication cables has a band falling within those of the communication cables, transmission signals and reception signals can be transmitted through an identical communication cable.

Furthermore, in the structure shown in Fig. 2, one remote transmitter and receiver 5 is connected to one remote-transmitter-and-receiver interface unit 10. As an alternative, a plurality of remote transmitters and receivers 5 can be connected radially to one remote-transmitter-and-receiver interface unit 10.

As mentioned above, the radio base station system in accordance with Embodiment 1 includes a radio base station main unit for controlling data transmitted and received to and from a mobile communication terminal on the basis of the value of a cell exhibiting a predetermined calling capacity, and a plurality of remote transmitters and receivers communication-connected with the radio base station main unit, each for making wireless communication connections with mobile terminals in a site which is an area thereof, so as to transmit and receive communications data transmitted from and to these mobile communication terminals to and from the radio base station main unit, and the cell is comprised of an arbitrary site according to the traffic of the remote transmitters and receivers therein. Therefore, the single cell can be comprised of either a plurality of sites or one site according to the traffic, so that effective use of the channel resources can be made.

In addition, because in the radio base station system in accordance with Embodiment 1, each remote transmitter and receiver is cascaded with respect to the radio base station main unit, an advantage of being able to reduce the facility size is provided.

### Embodiment 2.

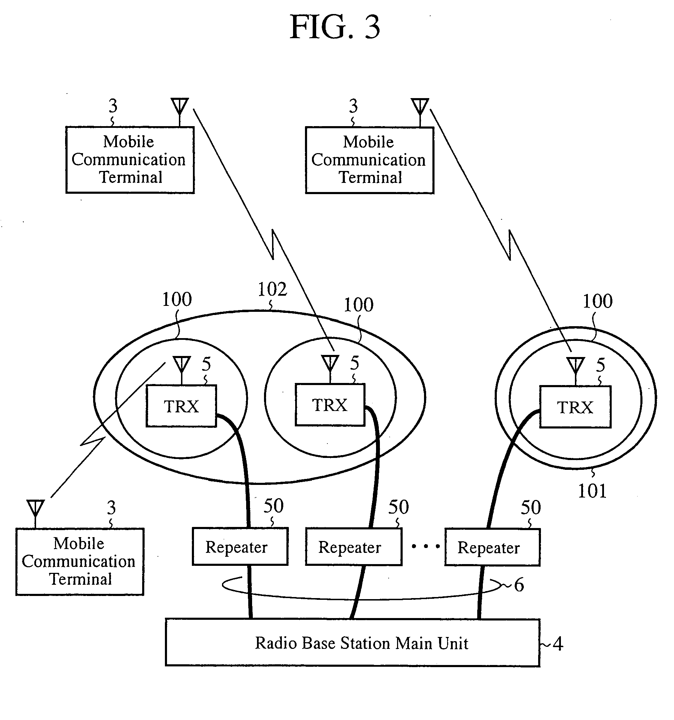

Fig. 3 is a block diagram showing a radio communications system in accordance with Embodiment 2 of the present invention.

The radio communications system in accordance with Embodiment 2 differs from the radio base station system 2 in accordance with Embodiment 1 shown in Fig. 1 in that a plurality of remote transmitters and receivers 5 are separately connected to a radio base station main unit 4 without being cascaded. A repeater 50 which serves as a relay having a function of amplifying signals and so on is disposed between the radio base station main unit 4 and each remote transmitter and receiver 5.

Communication cables 6 can be metallic cables or optical fiber cables. Because the detailed structure of each remote transmitter and receiver 5 and that of a remote-transmitter-and-receiver interface unit 10 are the same as those of Embodiment 1 shown in Fig. 2, the explanation of the components will be omitted hereafter. In each remote transmitter and receiver 5 in accordance with Embodiment 2, the structure for transmitting a signal to the next-stage remote transmitter and receiver 5 and the structure for receiving a signal from the next-stage remote transmitter and receiver 5 are unnecessary.

Thus, in accordance with Embodiment 2, by disposing a repeater 50 between the radio base station main unit 4 and each remote transmitter and receiver 5, a signal which is attenuated while being transmitted through a communication cable 6 can be amplified, and therefore can be transmitted even if the communication cable 6 is extended over a long distance. Therefore, a radio signal can be furnished to an area, such as an antenna blind zone in a distant building or the like, and the communication quality can be kept good.

A signal transmitted by radio from each remote transmitter and receiver 5 can be associated with identical data. In contrast with this, the signal transmitted by radio from each remote transmitter and receiver can be associated with different data. More specifically, when constructing a cell from each site 100 which is the service area of each remote transmitter and receiver 5, in order to use the channel resources effectively, one cell 101 can consist of one site 100 in a case in which the cell is a high traffic area. In contrast with this, one cell 102 can consist of a plurality of sites 100 in a case in which the cell is a low traffic area.

For example, in a case in which the calling capacity of each cell is 60 channels, by constructing the cell 101 from one site 100, a calling capacity of 60 channels can be achieved with one site 100 and the cell 101 is intended for a high traffic area. In contrast with this, in the case in which the cell 102 is constructed of two sites 100, because the calling capacity of 60 channels in all is shared by the two sites 100, the cell is intended for a low traffic area, as mentioned above. By thus constructing a cell arbitrarily according to the traffic, and then constructing the cell from a plurality of sites, the channel resources can be used more effectively.

In accordance with Embodiment 2, a repeater 50 having a function of amplifying signals and so on is disposed between the radio base station main unit 4 and each of all the remote transmitters and receivers 5. However, it is not necessary to dispose a repeater 50 between the radio base station main unit 4 and each of all the remote transmitters and receivers 5. For example, a repeater 50 can be disposed only for each long-distance transmission.

In addition, in accordance with Embodiment 2, the plurality of remote transmitters and receivers 5 are not cascaded with respect to the radio base station main unit 4, as previously explained. As an alternative, as shown in Embodiment 1, repeaters 50 can be applied to a structure in which a plurality of remote transmitters and receivers 5 are cascaded with respect to the radio base station main unit 4. More specifically, in the structure in which in which the plurality of remote transmitters and receivers are cascaded with respect to the radio base station main unit, a repeater 50 is inserted between the radio base station main unit 4 and the plurality of remote transmitters and receivers 5.

As mentioned above, in the radio base station system in accordance with Embodiment 2, because a repeater for amplifying signals is disposed between the radio base station main unit and each remote transmitter and receiver, even if each communication cable is extended over a long distance, an advantage of being able to keep the communication quality good is provided in addition to the advantages provided by Embodiment 1.

### Embodiment 3.

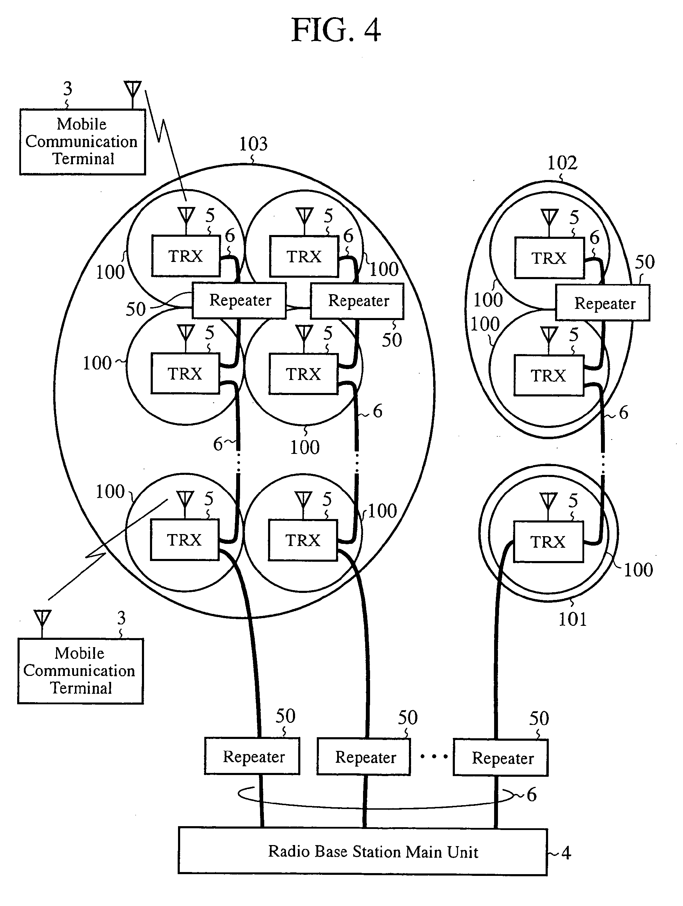

Fig. 4 is a block diagram showing a radio communications system in accordance with Embodiment 3 of the present invention.

The radio communications system in accordance with Embodiment 3 differs from the radio base station system 2 of Embodiment 1 shown in Fig. 1 in that repeaters 50 each having a function of amplifying signals and so on are disposed between a radio base station main unit 4 and remote transmitters and receivers 5, respectively. Furthermore, in accordance with Embodiment 3, a repeater 50 is also disposed between any two cascaded remote transmitters and receivers 5.

Communication cables 6 can be metallic cables or optical fiber cables. The detailed structure of each remote transmitter and receiver 5 and that of the remote-transmitter-and-receiver interface unit 10 are the same as those of Embodiment 1 shown in Fig. 2.

Thus, in accordance with Embodiment 3, by disposing repeaters 50 between the radio base station main unit 4 and remote transmitters and receivers 5, respectively, a signal which is attenuated while being transmitted through each communication cable 6 can be amplified, and therefore can be transmitted even if each communication cable 6 is extended over a long distance. In addition, because a repeater 50 is also disposed in a section between any two cascaded remote transmitters and receivers 5, amplification of a signal during this section can also be carried out. Therefore, a radio signal can be furnished to an area, such as an antenna blind zone in a further distant building or the like.

A signal transmitted by radio from each remote transmitter and receiver 5 can be associated with identical data. In contrast with this, the signal transmitted by radio from each remote transmitter and receiver can be associated with different data. In other words, as in the case of Embodiment 1, one cell can be constructed of one or more arbitrary sites 100 according to the traffic of the service areas of remote transmitters and receivers 5 therein.

The radio base station system in accordance with above-mentioned Embodiment 3 is constructed in such a manner that a repeater 50 is disposed in any section between the radio base station main unit 4 and a remote transmitter and receiver 5 and a repeater 50 is disposed between any two cascaded remote transmitters and receivers 5, as previously mentioned. As an alternative, a repeater 50 is disposed in a desired section between the radio base station main unit 4 and a remote transmitter and receiver 5 and a repeater 50 is disposed in a desired section between two cascaded remote transmitters and receivers 5 in such a manner that, for example, repeaters 50 are disposed only in long-distance transmission paths, respectively.

As mentioned above, in the radio base station system in accordance with Embodiment 3, because a repeater for amplifying signals is disposed between any two remote transmitters and receivers, even if a communication cable running between remote transmitters and receivers is extended over a long distance, an advantage of being able to keep the communication quality good is provided.

In addition, in the radio base station system in accordance with Embodiment 3, a repeater is disposed between any two cascaded remote transmitters and receivers while a repeater is also disposed in any section between the radio base station main unit and a remote transmitter and receiver. Therefore, an advantage of being able to keep the communication quality good is provided even if a communication cable running between remote transmitters and receivers and a communication cable running between a remote transmitter and receiver and the radio base station main unit are extended over a long distance.

In either of the above-mentioned embodiments, communications between each remote transmitter and receiver 5 and a mobile communication terminal 3 are carried out via analog radio signals. The present invention is not limited to this example, and digital modulation signals can be alternatively used for the communications and the same advantages can be provided.

### Embodiment 4.

In accordance with Embodiment 4, a state in which remote transmitters and receivers 5 are accommodated in a cell is changed dynamically according to the traffic of the remote transmitters and receivers. In Embodiment 4, a case in which a CDMA mobile communication system is disposed as a radio base station system will be explained.

First, the outline of Embodiment 4 will be explained.

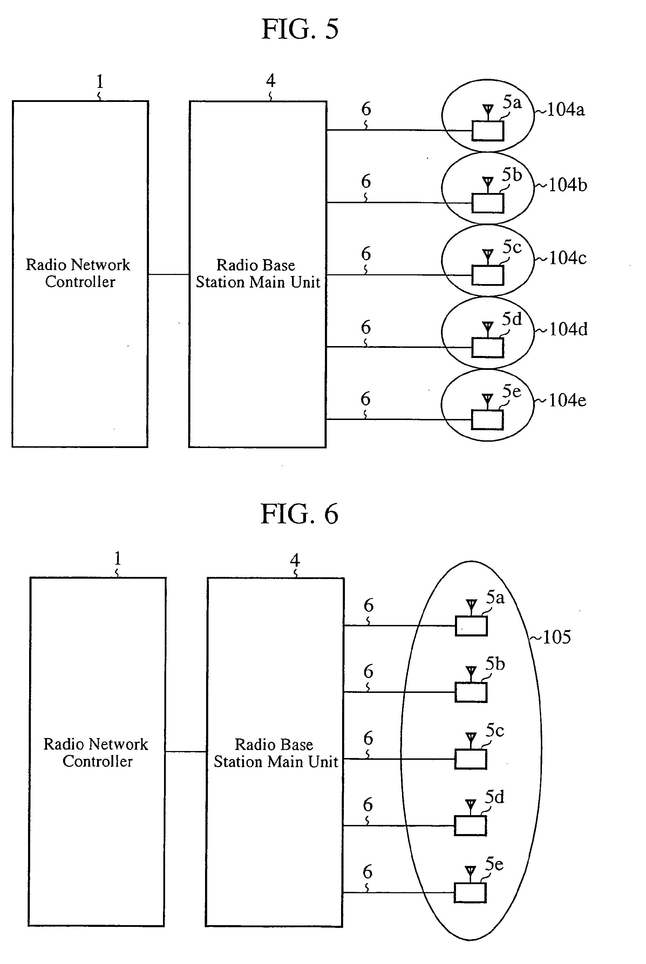

Fig. 5 is an explanatory drawing showing a relation between cells and remote transmitters and receivers 5 (5a to 5e) in a high traffic state.

In such a high traffic state, all the remote transmitters and receivers 5a to 5e under the control of the radio base station main unit 4 construct cells 104a to 104e, respectively. In the figure, the illustration of a site 100 which is the area of each remote transmitter and receiver 5 and mobile communication terminals 3 are omitted. Because a spread code assigned to each user is managed on a cell-by-cell basis, the number of spread codes which the radio base station system 2 can use increases, and it is therefore avoidable that spread codes which are assigned to users run short.

Fig. 6 is an explanatory drawing showing a relation between a cell and the remote transmitters and receivers 5 (5a to 5e) in a low traffic state.

In such a low traffic state, only a single cell 105 is placed under the control of the radio base station main unit 4, and all the remote transmitters and receivers 5a to 5e are placed under the control of the single cell 105 and transmit identical information.

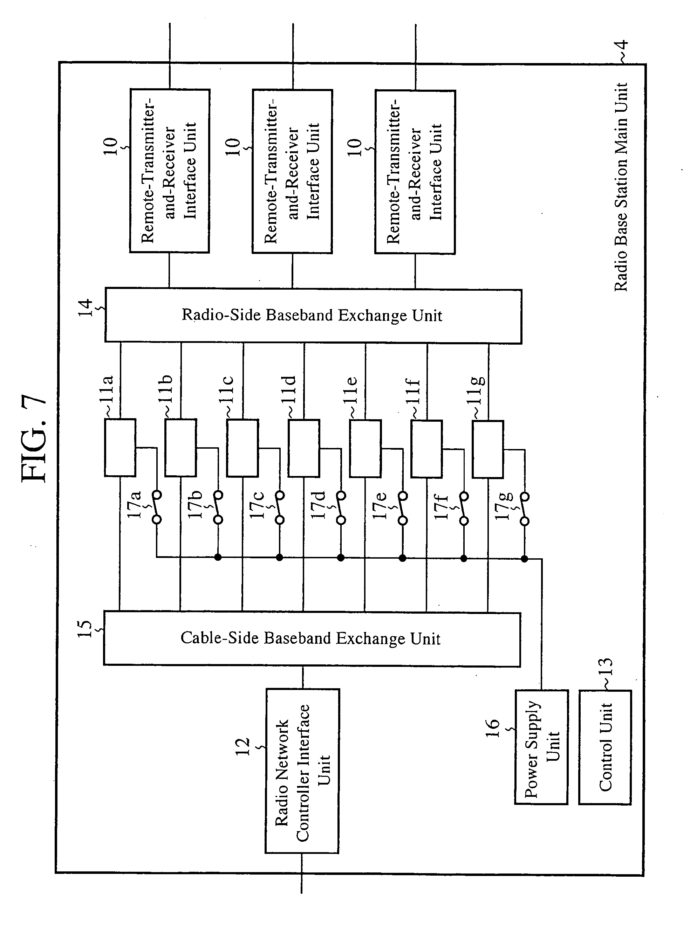

Fig. 7 is a block diagram showing the structure of the radio base station main unit 4.

The radio base station main unit 4 in accordance with Embodiment 4 includes remote-transmitter-and-receiver interface units 10, base band signal processing units 11, a radio network controller interface unit 12, a control unit 13, a radio-side baseband exchange unit 14, a cable-side baseband exchange unit 15, a power supply unit 16, and switches 17a to 17g. The remote-transmitter-and-receiver interface units 10 to the radio network controller interface unit 12 have the same structures as those of any of Embodiments 1 to 3, and, as the detailed structures of the base band signal processing units 11, the plurality of base band signal processing units 11a to 11g are shown in the figure. Each of these base band signal processing units 11a to 11g performs a baseband signal process for each user channel.

The control unit 13 is a functional unit which performs various control operations in the radio base station main unit 4, and has a function of, for example, monitoring the traffic of remote transmitters and receivers 5 included in each cell while they are in operation so as to control the number of cells according to the traffic to increase or decrease the number of cells. The radio-side baseband exchange unit 14 is a functional unit which performs exchange of signals between the base band signal processing units 11a to 11g and the remote-transmitter-and-receiver interface units 10, and the cable-side baseband exchange unit 15 is a functional unit which performs exchange of signals between the radio network controller interface unit 12 and the base band signal processing units 11a and 11g. The power supply unit 16 is used for furnishing power to the whole of the apparatus. The switches 17a to 17g are used for switching on and off electrical power supplies from the power supply unit 16 to the plurality of base band signal processing units 11a 11g, respectively, according to the control by the control unit 13.

Next, the operation of Embodiment 4 will be explained.

In the case of a cell configuration in which only one cell is placed under the control of the radio base station main unit in a low traffic state, as shown in Fig. 6, there are a large number of idle base band signal processing units to which no users are assigned among the plurality of base band signal processing units 11a to 11g. Because only one cell is placed under the control of the radio base station main unit, only part of the base band signal processing units 11a to 1g which corresponds to the single cell is used for common channels. The power consumption can be reduced by stopping the electric supply to these base band signal processing units in an idle state among the plurality of base band signal processing units 11a to 11g.

More specifically, in accordance with this embodiment, when the traffic of an area which consists of a plurality of cells decreases, the plurality of cells are unified to one cell, and switching is carried out so that all remote transmitters and receivers 5 in the area can transmit an identical signal and can receive an identical signal. Although common channels, such as a perch channel and a paging channel, must be arranged in each cell, as the number of cells arranged for the radio base station main unit 4 decreases the number of common channels in the radio base station main unit 4 decreases. That is, the number of base band signal processing units in the idle state, among the plurality of base band signal processing units 11a to 11g, further increases. By stopping the electric supply to the base band signal processing units in this idle state, among the plurality of base band signal processing units 11a to 11g, the power consumption of the radio base station main unit 4 can be reduced.

By controlling the number of cells according to the change in the traffic amount, the number of base band signal processing units which are used for the common channels, among the plurality of base band signal processing units 11a to 11g, can be controlled to a number commensurate with the traffic amount. By stopping the electric supplies to the idle baseband processing units used for the common channels, power consumption commensurate with the traffic amount can be provided.

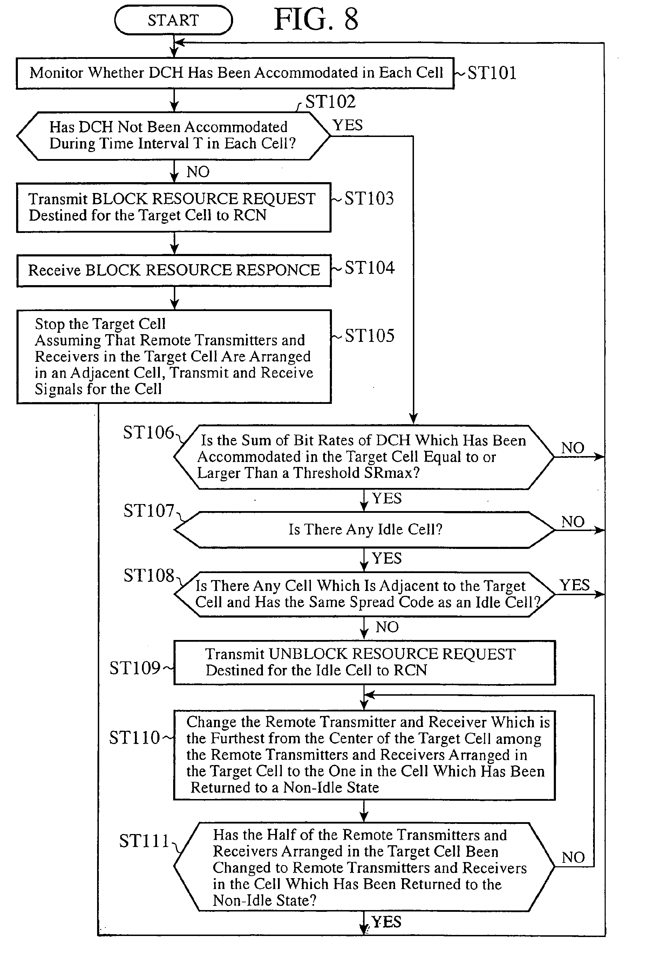

Fig. 8 is a flow chart showing the control process of increasing or decreasing the number of cells.

A flow of steps ST101 to ST105 included in the flow chart corresponds to a process of combining cells, and a flow of steps ST101 to ST111 corresponds to a process of splitting a cell.

The control unit 13 monitors whether DCH (Dedicated CHannel) has been accommodated in each cell while the radio base station main unit 4 is in operation (step ST101). As this monitoring process, the control unit checks to see whether DCH has been accommodated during a time interval T in each cell (step ST102). For example, this time interval T is 5 to 30 minutes in a case in which the time required to start the base band signal processing units 11a to 11g is about 30 seconds to 1 minute. This time interval T can be variously selected according to the operational conditions or the like.

When, in step ST102, it is judged that DCH has not been accommodated during the time interval T in a specific cell (referred to as a cell A from here on), the control unit transmits BLOCKRESOURCE REQUEST for the cell A to a radio network controller 1 (RNC: Radio Network Controller) (step ST103) . After that, when receiving BLOCK RESOURCE RESPONSE from the radio network controller 1 (step ST104), the control unit 13 stops the cell A. Each remote transmitter and receiver 5 in cell A transmits and receives signals destined for an adjacent cell B by assuming that each remote transmitter and receiver 5 is placed in the cell B. The BLOCK RESOURCE REQUEST is a signal which enables the radio base station main unit 4 to notify the radio network controller 1 that a cell under the control thereof becomes disabled because of maintenance control, failure, or the like, and the radio network controller 1 stops newly assigning any call to the cell when receiving this BLOCK RESOURCE REQUEST. Then, when all calls in progress are released and preparation for stopping the cell is completed, the radio network controller returns a response BLOCK RESOURCE RESPONSE. When receiving this BLOCK RESOURCE RESPONSE, the radio base station main unit 4 stops the cell completely.

BLOCK RESOURCE REQUEST, BLOCK RESOURCE RESPONSE, and UNBLOCK RESOURCE INDICATION which will be mentioned later are signal names which are defined by the common standards (3gpp) of CDMA.

When stopping either one of the cells, the control unit 13 turns off some of the switches 17a to 17g which correspond to all base band signal processing units in the idle state among the plurality of base band signal processing units 11a to 11g in order to stop all the idle base band signal processing units. In the example of Fig. 7, the switch 17e is turned off and the electric power supply to the base band signal processing unit 11e is in the OFF state.

In contrast, when, in step ST102, it is judged that DCH has been accommodated DCH during the time interval in a specific cell (e.g., a cell C), the control unit judges whether or not the sum of bit rates of DCH which the cell C has accommodated is equal to or larger a threshold SRmax (step ST106). When, in this step ST106, judging that when the sum of bit rates is smaller than the threshold SRmax, the control unit returns to step ST101 and then continues the monitoring process. In contrast, when the sum of bit rates is equal to or larger the threshold SRmax, the control unit judges whether there is any idle cell first (step ST107). When, in this step ST107, there is an idle cell (e.g., a cell D), the control unit judges whether there is any cell which is adjacent to the cell C and which has the same spread code as the cell D (step ST108). When, in this step ST108, there is no adjacent cell having the same spread code as the cell D, the control unit transmits UNBLOCK RESOURCE INDICATION destined for the cell D to the radio network controller 1 (step ST109). This UNBLOCK RESOURCE INDICATION is a signal with which the radio base station main unit 4 notifies the radio network controller 1 that a cell under the control becomes usable for maintenance control, restoration, etc. , so that the radio network controller 1 and the radio base station main unit 4 releases the idle state of the cell.

In contrast, when, in above-mentioned step ST107, there is no idle cell, or when, in step ST108, there is an adjacent cell having the same spread code as the cell D, the control unit returns to step ST101.

When, in step ST109, transmitting UNBLOCK RESOURCE INDICATION, the control unit changes the remote transmitter and receiver 5 which is the furthest from the center of the cell C among remote transmitters and receivers 5 arranged in the original cell C into a remote transmitter and receiver in the cell D (step ST110). After that, the control unit continues this process until it changes the half of the remote transmitters and receivers 5 arranged in the cell C to into remote transmitters and receivers in the cell D (step ST111).

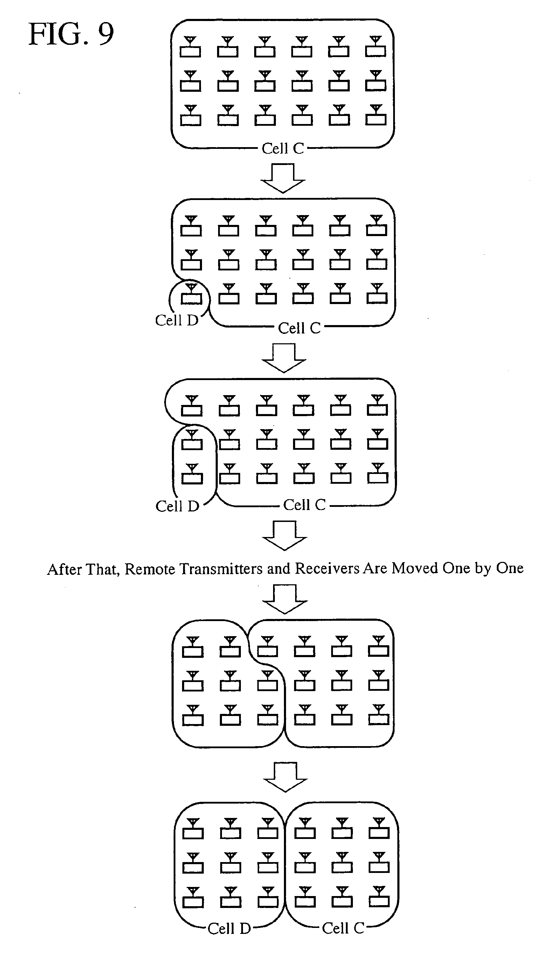

Fig. 9 is an explanatory drawing showing the process of splitting a cell.

As shown in the figure, the control unit changes the remote transmitter and receiver 5 which is the furthest from the center of the cell C among remote transmitters and receivers 5 arranged in the cell C into a remote transmitter and receiver in the cell D. By then performing the same process repeatedly, the control unit changes the remote transmitters and receivers 5 arranged in the cell C one by one so as to change the half of the remote transmitters and receivers 5 arranged in the cell C to remote transmitters and receivers in the cell D.

As mentioned above, the radio base station system in accordance with Embodiment 4 monitors the traffic of remote transmitters and receivers included in a cell while they are in operation, and changes the structure of the above-mentioned cell and sites according to the traffic. Therefore, the radio base station system can provide adequate channel resources at the time of a high traffic while the remote transmitters and receivers are in operation, and can make effective use of the channel resources at the time of a low traffic.

Furthermore, the radio base station system in accordance with Embodiment 4, when the traffic of remote transmitters and receivers included in an arbitrary cell is equal to or smaller than a predetermined amount, stops the arbitrary cell and changes some remote transmitters and receivers into the ones under the control of an adjacent cell. Therefore, the radio base station system can make effective use of the channel resources in a low traffic state.

In addition, the radio base station system in accordance with Embodiment 4 has baseband processing units each of which performs a communications control process on a remote transmitter and receiver, and, when either one of the cells stops, and stops the electric power supply to baseband units in the idle state. Therefore, the radio base station system can achieve low power consumption in a low traffic state, and, as a result, makes it possible to reduce the power consumption of the radio base station system.

Furthermore, the radio base station system in accordance with Embodiment 4, when the traffic of remote transmitters and receivers included in an arbitrary cell is equal to or larger a predetermined threshold, splits the remote transmitters and receivers included in the arbitrary cell into a plurality of cells. Therefore, the present embodiment offers an advantage of being able to provide adequate channel resources in this case, such as eliminating the lack of the spread codes in the high traffic state.

### Embodiment 5.

Embodiment 5 shows a method of increasing or decreasing cells which is different from that of Embodiment 4. More specifically, in accordance with above-mentioned Embodiment 4, when the traffic amount in either one of the cells is zero, the cell is combined to another cell. In contrast, in accordance with Embodiment 5, when the traffic amount of a cell becomes lower than a certain value (SRmin) which is specified beforehand, the cell is combined to another cell. Because the structure of Embodiment 5 in terms of drawings is the same as that of Embodiment 4, the structure will be explained hereafter with reference to Figs. 5 to 7.

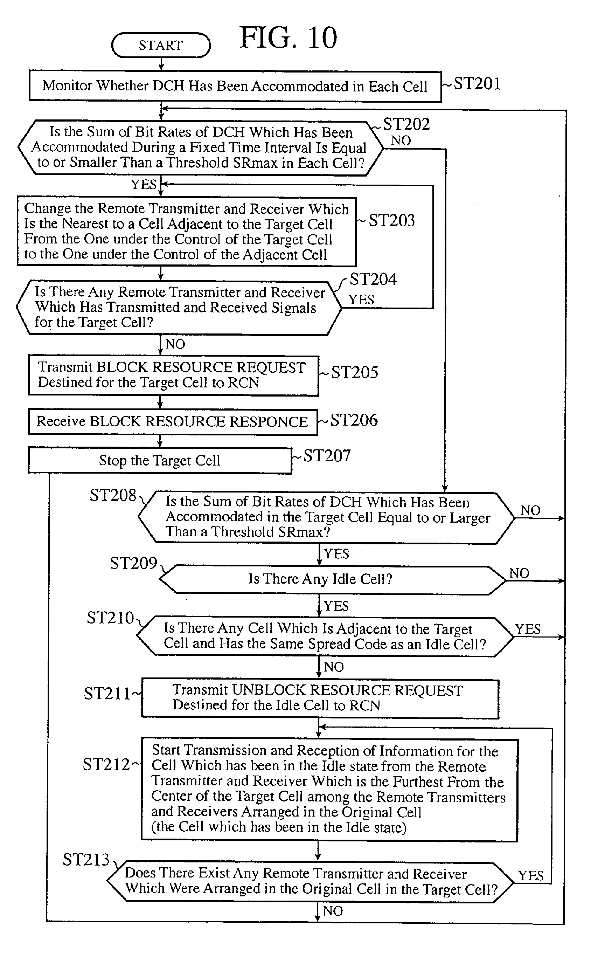

Fig. 10 is a flow chart showing the control process of increasing or decreasing the cells in accordance with Embodiment 5. In this flow chart, a flow of steps ST201 to ST207 corresponds to a process of combining cells, and a flow of steps ST201 to ST213 corresponds to a process of splitting a cell.

The control unit 13 monitors DCH which has been accommodated in each cell while the system is in operation (step ST201). As this monitoring, the control unit checks to see whether or not the sum of bit rates of DCH which has been accommodated during a fixed time interval is equal to or smaller than a predetermined value (SRmin) in each cell (step ST202). This fixed time is, for example, 5 to 30 minutes, as in the case of step ST102 of Embodiment 4. When, in this step ST202, judging that the criterion for judgment is satisfied in a cell (e.g., a cell E), the control unit changes the remote transmitter and receiver 5 which is the nearest to a cell F which is adjacent to the cell E from the one under the control of the cell E to the one under the control of the cell F (step ST203). The control unit then continues the operation of step ST203 until no remote transmitter and receiver 5 which transmits and receives signals for the cell E exists (step ST204) .

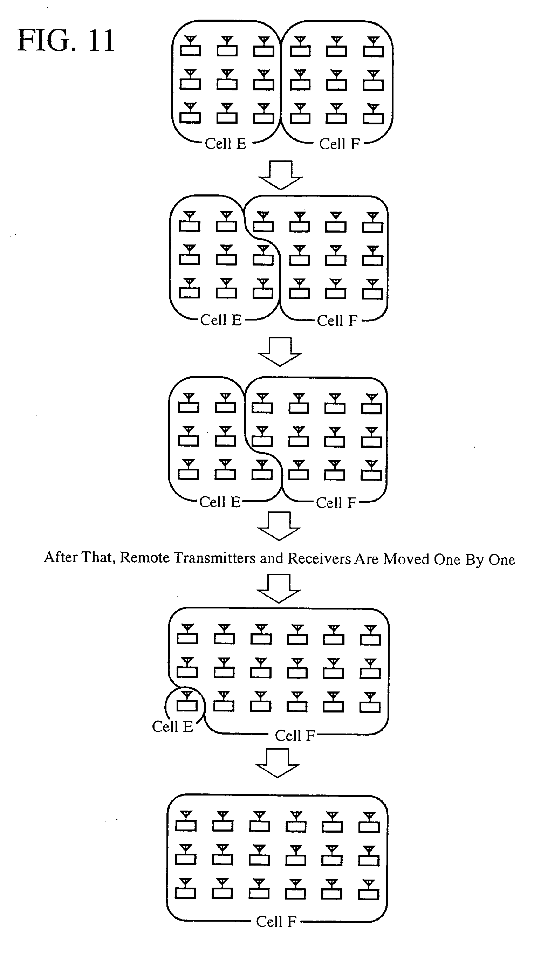

Fig. 11 is an explanatory drawing showing the process of combining cells.

When the cell E is adjacent to the cell F, as shown in the figure, and the traffic of the cell E is equal to or less than the predetermined amount SRmin, the control unit changes the remote transmitters and receivers 5 one by one to remote transmitters and receivers in the cell F, and carries out this process until no remote transmitter and receiver 5 under the control of the cell E exists.

Referring back to Fig. 10, when no remote transmitter and receiver 5 under the control of the cell E exists, the radio base station main unit 4 transmits BLOCK RESOURCE REQUEST to the radio network controller 1 (step ST205). After that, when receiving BLOCK RESOURCE RESPONSE from the radio network controller 1 (step ST206), the control unit performs a process of stopping the cell E (step ST207).

In step ST202, the splitting process (steps ST208 to ST213) which is carried out when the sum of bit rates of DCH exceeds the predetermined amount SRmin in one of the cells (e.g., a cell G) is fundamentally the same as the operation of steps ST106 to ST111 in Embodiment 4. However, in Embodiment 5, when there is an idle cell H which is adjacent to the cell G, the control unit starts transmission and reception of information for the cell H from the remote transmitter and receiver 5 which is the furthest from the center of the cell G among the remote transmitters and receivers 5 arranged in the cell H (step ST212), and carries out this process until remote transmitters and receivers 5 which were arranged in the cell H do not exist in the cell G (step ST213).

As mentioned above, the radio base station system in accordance with Embodiment 5, when the traffic of a cell becomes lower than a certain amount which is specified beforehand, combines the cell to another cell, and, changes remote transmitters and receivers which are existing in the cell which it will stop to remote transmitter and receivers under the control of the other cell, to which the former cell is combined, one by one. Therefore, the present embodiment can provide reduction in the rapid change in the communication quality at the time of cell combining, in addition to the same advantages as those offered by Embodiment 4.

### Embodiment 6.

Embodiment 6 shows a method of splitting a cell which is different from those of above-mentioned Embodiments 4 and 5. Because the structure of Embodiment 6 in terms of drawings is the same as that of Embodiment 4, the explanation of the structure will be omitted hereafter.

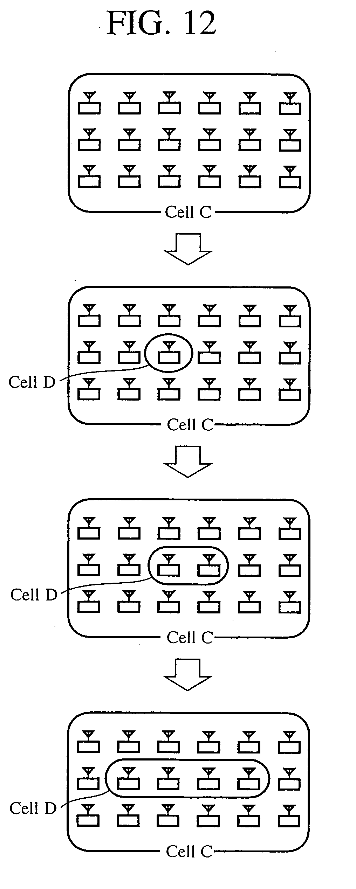

Fig. 12 is an explanatory drawing showing a process of splitting a cell in accordance with Embodiment 6.

In accordance with Embodiment 6, in the process of splitting a cell, a new cell (in the example shown in the figure, a cell D) is generated within a certain cell (in the example shown in the figure, a cell C). More specifically, a remote transmitter and receiver 5 in the vicinity of the center of cell C is made to be under the control of the cell D, and, after that, adjacent remote transmitters and receivers 5 are made to be under the control of the cell D one by one. By thus performing the process of splitting a cell, the radio base station system simplifies a relation between the new cell and an adjacent cell for checking to see whether or not identical spread codes are adjacently provided.

As mentioned above, the radio base station system in accordance with Embodiment 6 generates a new cell within a certain cell when performing the process of splitting a cell. Therefore, the present embodiment can eliminate the necessity of checking to see whether identical spread codes are adjacently provided at the time of splitting a cell, and can perform the process of splitting a cell more easily, in addition to providing the same advantages as those offered by Embodiment 4.

In above-mentioned Embodiments 4 to 6, the traffic for every cell is monitored by the radio base station main unit 4. As an alternative, the radio network controller 1 which is a high order device located above the radio base station main unit 4 can monitor the traffic for every cell. For example, a control message which the radio network controller 1 transmits to the radio base station main unit 4 to make the radio base station main unit 4 perform cell control is newly defined so that the above-mentioned function can be carried out under the control of the radio network controller 1.

Furthermore, in Embodiments 4 to 6, parallel connections are established between the radio base station main unit 4 and remote transmitters and receivers 5. As an alternative, cascade connections can be established between the radio base station main unit 4 and remote transmitters and receivers 5, as in the case of Embodiment 1.

In each of the above-mentioned embodiments, a CDMA mobile communication system is explained as an example of the radio base station system. Another communications system other than this CDMA mobile communication system can be similarly applied. However, in a case in which each of the above-mentioned embodiments is applied to a system, such as a CDMA system, in which the calling capacity per cell is predetermined according to standards, the advantages can be greatly enhanced.

### Industrial Applicability

As mentioned above, the radio base station system in accordance with the present invention makes effective use of the channel resources in a structure of connecting a radio base station main unit with remote transmitters and receivers, and is suitable for use with mobile communication base stations and so on.

## Claims

1. A radio base station system comprising:
a radio base station main unit for controlling transmission data and received data to and from mobile communication terminals on a basis of a value of a cell exhibiting a predetermined call capacity; and
a plurality of remote transmitters and receivers communication-connected with said radio base station main unit, each for making a wireless communication connection with said mobile terminals in a site which is an area thereof so as to transmit and receive communications data of these mobile communication terminals to and from said radio base station main unit,
said cell being comprised of an arbitrary site according to traffic of said remote transmitters and receivers.

2. The radio base station system according to claim 1, **characterized in that** a repeater for amplifying signals is disposed between the radio base station main unit and the remote transmitters and receivers.

3. The radio base station system according to claim 1, **characterized in that** each of the remote transmitters and receivers is cascaded to the radio base station main unit.

4. The radio base station system according to claim 3, **characterized in that** repeaters for amplifying signals are disposed among the remote transmitters and receivers.

5. The radio base station system according to claim 4, **characterized in that** a repeater for amplifying signals is disposed between the radio base station main unit and the remote transmitters and receivers.

6. The radio base station system according to claim 1, **characterized in that** said system monitors traffic of remote transmitters and receivers included in a cell, and changes a structure of said cell and a site according to the traffic.

7. The radio base station system according to claim 6, **characterized in that** when traffic of remote transmitters and receivers included in an arbitrary cell is equal to or smaller than a predetermined amount, said system stops the arbitrary cell and changes said remote transmitters and receivers to remote transmitters and receivers under control of an adjacent cell.

8. The radio base station system according to claim 7, **characterized in that** said system includes a baseband processing unit for performing a communications control process on a remote transmitter and receiver, and, when a cell is stopped, stops electric power supply to a baseband unit in an idle state.

9. The radio base station system according to claim 6, **characterized in that** when traffic of remote transmitters and receivers included in an arbitrary cell is equal to or larger than a predetermined threshold, said system divides the remote transmitters and receivers included in the arbitrary cell into a plurality of cells.
